(19) Europäisches Patentamt
European Patent Office
Office européen des brevets

(11) EP 3 760 770 A1

(12) EUROPEAN PATENT APPLICATION
published in accordance with Art. 153(4) EPC

(43) Date of publication:
**06.01.2021 Bulletin 2021/01**

(21) Application number: **19759894.9**

(22) Date of filing: **25.02.2019**

(51) Int Cl.:
***D01F 6/46*** (2006.01) ***D04H 1/4291*** (2012.01)

(86) International application number:
**PCT/JP2019/007022**

(87) International publication number:
**WO 2019/167871 (06.09.2019 Gazette 2019/36)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **27.02.2018 JP 2018033349**

(71) Applicant: **Idemitsu Kosan Co.,Ltd.**
**Chiyoda-ku**
**Tokyo 100-8321 (JP)**

(72) Inventors:
- **SUGIUCHI, Takumi**
  **Ichihara-shi, Chiba 299-0193 (JP)**
- **MINAMI, Yutaka**
  **Ichihara-shi, Chiba 299-0193 (JP)**
- **YABE, Mari**
  **Ichihara-shi, Chiba 299-0193 (JP)**

(74) Representative: **Gille Hrabal**
**Brucknerstrasse 20**
**40593 Düsseldorf (DE)**

# (54) FIBERS AND NON-WOVEN FABRIC

(57) The present invention relates to a fiber including a thermoplastic resin composition containing a polypropylene-based resin (A) in which a melting endotherm (ΔH-D) obtained from a melting endothermic curve obtained by holding a sample under a nitrogen atmosphere at -10°C for 5 minutes and then increasing the temperature at a rate of 10°C/min by using a differential scanning calorimeter (DSC) is 0 J/g or more and 80 J/g or less, and a melt flow rate (MFR) measured under a condition at a temperature of 230°C and a load of 2.16 kg in conformity with JIS K7210 is 1,000 g/10 min or more; and a polypropylene-based resin (B) (exclusive of the polypropylene-based resin (A)) having a melting point (Tm-D) of higher than 120°C, the fiber having a fiber diameter of 2.0 denier or less.

EP 3 760 770 A1

## Description

### Technical Field

The present invention relates to a fiber and a nonwoven fabric containing the fiber.

### Background Art

In recent years, higher spinnability has been required for a resin for fiber, and for example, enlargement of a spinnable temperature region, or the like has been required.

For example, PTL 1 discloses a nonwoven fabric composed of a resin composition containing a high-crystalline polyolefin and a low-crystalline polyolefin, the nonwoven fabric satisfying specified conditions, for the purpose of reducing the fiber diameter of fibers constituting the nonwoven fabric while preserving spinning stability.

### Citation List

### Patent Literature

PTL 1: WO 2014/119687 A

### Summary of Invention

### Technical Problem

However, according to the fiber composed of the resin composition described in PTL 1, there was a case where sufficient spinnability is not obtained.

In view of the foregoing circumstances, the present invention has been made, and an object thereof is to provide a fiber having more excellent spinnability and a nonwoven fabric containing the foregoing fiber.

### Solution to Problem

In order to solve the aforementioned problem, the present inventors made extensive and intensive investigations. As a result, it has been found that the foregoing problem can be solved by the following inventions.

Specifically, the disclosures of the present application are concerned with the following.

[1] A fiber including a thermoplastic resin composition containing a polypropylene-based resin (A) in which a melting endotherm (ΔH-D) obtained from a melting endothermic curve obtained by holding a sample under a nitrogen atmosphere at -10°C for 5 minutes and then increasing the temperature at a rate of 10°C/min by using a differential scanning calorimeter (DSC) is 0 J/g or more and 80 J/g or less, and a melt flow rate (MFR) measured under a condition at a temperature of 230°C and a load of 2.16 kg in conformity with JIS K7210 is 1,000 g/10 min or more; and a polypropylene-based resin (B) (exclusive of the polypropylene-based resin (A)) having a melting point (Tm-D) of higher than 120°C, the fiber having a fiber diameter of 2.0 denier or less.

[2] The fiber as set forth in the above [1], wherein the MFR of the polypropylene-based resin (A) is 2,300 g/10 min or more.

[3] The fiber as set forth in the above [1] or [2], wherein the MFR of the polypropylene-based resin (A) is 3,500 g/10 min or less.

[4] The fiber as set forth in any of the above [1] to [3], wherein the polypropylene-based resin (A) is a propylene homopolymer.

[5] The fiber as set forth in any of the above [1] to [4], wherein the MFR of the polypropylene-based resin (B) is 5 g/10 min or more and 100 g/10 min or less.

[6] The fiber as set forth in any of the above [1] to [5], wherein the polypropylene-based resin (B) is a propylene homopolymer.

[7] The fiber as set forth in any of the above [1] to [6], wherein the content of the polypropylene-based resin (A) occupying in the sum total of 100% by mass of the polypropylene-based resin (A) and the polypropylene-based resin (B) is 1% by mass or more and 30% by mass or less.

[8] A nonwoven fabric containing the fiber as set forth in any of the above [1] to [7].

Advantageous Effects of Invention

In accordance with the present invention, it is possible to provide a fiber having more excellent spinnability and a nonwoven fabric containing the foregoing fiber.

Description of Embodiments

The present invention is hereunder described in detail. In this specification, the terminology "A to B" regarding the description of a numerical value means "A or more and B or less" (in the case of A < B), or "A or less and B or more" (in the case of A > B). In addition, in the present invention, a combination of preferred embodiments is more preferred embodiment.

The present invention is hereunder described in detail.

[Fiber]

The fiber of the present invention is a fiber including a thermoplastic resin composition containing a polypropylene-based resin (A) in which a melting endotherm (ΔH-D) obtained from a melting endothermic curve obtained by holding a sample under a nitrogen atmosphere at -10°C for 5 minutes and then increasing the temperature at a rate of 10°C/min by using a differential scanning calorimeter (DSC) is 0 J/g or more and 80 J/g or less, and a melt flow rate (MFR) measured under a condition at a temperature of 230°C and a load of 2.16 kg in conformity with JIS K7210 is 1,000 g/10 min or more; and a polypropylene-based resin (B) (exclusive of the polypropylene-based resin (A)) having a melting point (Tm-D) of higher than 120°C, the fiber having a fiber diameter of 2.0 denier or less.

(Polypropylene-based Resin (A))

In the polypropylene-based resin (A) which is used in the present embodiment, a melting endotherm (ΔH-D) obtained from a melting endothermic curve obtained by holding a sample under a nitrogen atmosphere at -10°C for 5 minutes and then increasing the temperature at a rate of 10°C/min by using a differential scanning calorimeter (DSC) is 0 J/g or more and 80 J/g or less. When the melting endotherm (ΔH-D) is more than 80 J/g, there is a concern that the spinnability of the fiber including the thermoplastic resin composition containing the polypropylene-based resin (A) is lowered. In addition, there is a concern that drape-ability and smoothness of the nonwoven fabric containing the foregoing fiber are lowered. From such a viewpoint, the melting endotherm (ΔH-D) is preferably 20 J/g or more, more preferably 25 J/g or more, still more preferably 27 J/g or more, and especially preferably 30 J/g or more, and it is preferably 50 J/g or less, more preferably 45 J/g or less, and still more preferably 40 J/g or less. When the melting endotherm is 20 J/g or more, stickiness is more suppressed.

The melting endotherm (ΔH-D) is calculated in a manner in which when a line connecting a point on the low-temperature side free from a change of the amount of heat with a point on the high-temperature side free from a change of the amount of heat is defined as a baseline, an area surrounded by a line portion including the peak observed on the highest temperature side of the melting endothermic curve obtained by the DSC measurement and the baseline is determined.

The melting endotherm (ΔH-D) can be controlled by appropriately adjusting the monomer concentration or the reaction pressure.

In the polypropylene-based resin (A), a melt flow rate (MFR) measured under a condition at a temperature of 230°C and a load of 2.16 kg in conformity with JIS K7210 is 1,000 g/10 min or more. When the melt flow rate is less than 1,000 g/10 min, there is a concern that the effect for improving the spinnability becomes insufficient. From such a viewpoint, the melt flow rate is preferably 1,500 g/10 min or more, more preferably 2,000 g/10 min or more, still more preferably 2,300 g/10 min or more, and yet still more preferably 2,500 g/10 min or more. Meanwhile, from the viewpoint of suppressing roping at the time of spinning, an upper limit value of the melt flow rate is preferably 3,500 g/10 min or less, more preferably 3,300 g/10 min or less, and still more preferably 3,000 g/10 min or less.

From the viewpoint of enhancing the spinnability of the fiber, a weight average molecular weight (Mw) of the polypropylene-based resin (A) is preferably 30,000 or more, more preferably 35,000 or more, and still more preferably 40,000 or more, and it is preferably 100,000 or less, more preferably 85,000 or less, and still more preferably 55,000 or less.

A molecular weight distribution (Mw/Mn) of the polypropylene-based resin (A) is preferably less than 3.0, more preferably 2.5 or less, and still more preferably 2.3 or less. When the molecular weight distribution of the polypropylene-based resin (A) is less than 3.0, the generation of stickiness in the fiber obtained by spinning is suppressed.

The weight average molecular weight (Mw) and the molecular weight distribution (Mw/Mn) are determined by means of a gel permeation chromatography (GPC) measurement. The weight average molecular weight is a weight average molecular weight expressed in terms of polystyrene, as measured by using the following device under the

following condition, and the molecular weight distribution is a value calculated from a number average molecular weight (Mn) as measured similarly and the aforementioned weight average molecular weight.

<GPC Measuring Device>

Column: "TOSO GMHHR-H(S)HT", manufactured by Tosoh Corporation
Detector: RI detector for liquid chromatogram, "WATERS 150C", manufactured by Waters Corporation

<Measurement Condition>

Solvent: 1,2,4-Trichlorobezene
Measurement temperature: 145°C
Flow rate: 1.0 mL/min
Sample concentration: 2.2 mg/mL
Injection amount: 160 μL
Calibration curve: Universal Calibration
Analysis program: HT-GPC (Ver. 1.0)

From the viewpoint of enhancing the spinnability of the fiber, a melting point (Tm-D) of the polypropylene-based resin (A) is preferably 0°C or higher, more preferably 30°C or higher, and still more preferably 60°C or higher, and it is preferably 120°C or lower, and more preferably 100°C or lower.

The melting point (Tm-D) of the polypropylene-based resin (A) in the present embodiment is defined as a peak top of a peak observed on the highest temperature side of a melting endothermic curve obtained by holding under a nitrogen atmosphere at -10°C for 5 minutes and then increasing the temperature at a rate of 10°C/min by using a differential scanning calorimeter (DSC).

The polypropylene-based resin (A) is not particularly limited so long as the aforementioned melting endotherm (ΔH-D) and melt flow rate (MFR) fall within the aforementioned ranges, respectively, and it may be a propylene homopolymer or may be a copolymer. Above all, a propylene homopolymer is preferred.

In the case where the polypropylene-based resin (A) is a copolymer, a copolymerization ratio of a propylene unit is more than 50 mol%, preferably 60 mol% or more, more preferably 70 mol% or more, still more preferably 90 mol% or more, and yet still more preferably 95 mol% or more. A copolymerizable monomer is at least one selected from the group consisting of ethylene and an α-olefin having 4 to 30 carbon atoms, and specifically, examples thereof include ethylene, 1-butene, 1-pentene, 1-hexene, 1-octene, and 1-decene. In the case where the polypropylene-based resin (A) is a copolymer, it is preferred that the polypropylene-based resin (A) contains at least one structural unit selected from the group consisting of ethylene and an α-olefin having 4 to 30 carbon atoms in an amount of more than 0 mol% and 20 mol% or less.

(Production Method of Polypropylene-based Resin (A))

The polypropylene-based resin (A) can be produced using a metallocene-based catalyst described in, for example, WO 2003/087172 A. In particular, a metallocene-based catalyst using a transition metal compound in which a ligand forms a crosslinked structure via a crosslinking group is preferred. Above all, a metallocene-based catalyst obtained by combining a transition metal compound in which a crosslinked structure is formed via two crosslinking groups with a cocatalyst is preferred.

Specifically, examples thereof include a polymerization catalyst containing

(i) a transition metal compound represented by the general formula (I):

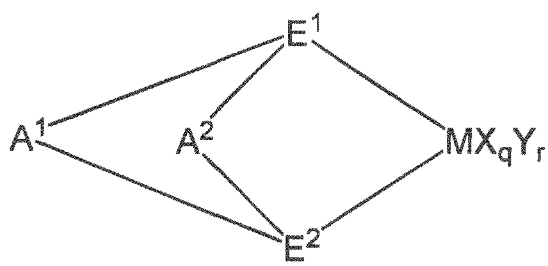

(I)

wherein,

M represents a metal element belonging to any one of the Groups 3 to 10 or the lanthanoid series in the periodic table; $E^1$ and $E^2$ each represent a ligand selected from a substituted cyclopentadienyl group, an indenyl group, a substituted indenyl group, a heterocyclopentadienyl group, a substituted heterocyclopentadienyl group, an amide group, a phosphide group, a hydrocarbon group, and a silicon-containing group, and forms a crosslinked structure via $A^1$ and $A^2$, and may be the same as or different from each other; X represents a σ-bonding ligand, and when plural X's are present, the plural X's may be the same as or different from each other, and each X may crosslink with any other X, $E^1$, $E^2$, or Y; Y represents a Lewis base, and when plural Y's are present, the plural Y's may be the same as or different from each other, and each Y may crosslink with any other Y, $E^1$, $E^2$, or X; $A^1$ and $A^2$ each represent a divalent crosslinking group that bonds two ligands and represent a hydrocarbon group having 1 to 20 carbon atoms, a halogen-containing hydrocarbon group having 1 to 20 carbon atoms, a silicon-containing group, a germanium-containing group, a tin-containing group, -O-, -CO-, -S-, $-SO_2-$, -Se-, $-NR^1-$, $-PR^1-$, - $P(O)R^1-$, $-BR^1-$, or $-AlR^1-$, wherein $R^1$ represents a hydrogen atom, a halogen atom, a hydrocarbon group having 1 to 20 carbon atoms, or a halogen-containing hydrocarbon group having 1 to 20 carbon atoms, and may be the same as or different from each other; q represents an integer of 1 to 5 and corresponds to [(valence of M) - 2]; and r represents an integer of 0 to 3, and

(ii) at least one component selected from the group consisting of (ii-1) a compound capable of reacting with the transition metal compound that is the component (i) or a derivative thereof to form an ionic complex and (ii-2) an aluminoxane.

The transition metal compound that is the aforementioned component (i) is preferably a transition metal compound in which the ligand is of a (1,2')(2,1') double crosslinking type, and examples thereof include (1,2'-dimethylsilylene)(2,1'-dimethylsilylene)-bis(3-trimethylsilylmethylindenyl)zirconium dichloride.

Specific examples of the compound that is the aforementioned component (ii-1) include triethylammonium tetraphenylborate, tri-n-butylammonium tetraphenylborate, trimethylammonium tetraphenylborate, tetraethylammonium tetraphenylborate, methyl(tri-n-butyl)ammonium tetraphenylborate, benzyl(tri-n-butyl)ammonium tetraphenylborate, dimethyldiphenylammonium tetraphenylborate, triphenyl(methyl)ammonium tetraphenylborate, trimethylanilinium tetraphenylborate, methylpyridinium tetraphenylborate, benzylpyridinium tetraphenylborate, methyl(2-cyanopyridinium) tetraphenylborate, triethylammonium tetrakis(pentafluorophenyl)borate, tri-n-butylammonium tetrakis(pentafluorophenyl)borate, triphenylammonium tetrakis(pentafluorophenyl)borate, tetra-n-butylammonium tetrakis(pentafluorophenyl)borate, tetraethylammonium tetrakis(pentafluorophenyl)borate, benzyl(tri-n-butyl)ammonium tetrakis(pentafluorophenyl)borate, methyldiphenylammonium tetrakis(pentafluorophenyl)borate, trip he nyl(methyl) ammonium tetrakis(pentafluorophenyl)borate, methylanilinium tetrakis(pentafluorophenyl)borate, dimethylanilinium tetrakis(pentafluorophenyl)borate, trimethylanilinium tetrakis(pentafluorophenyl)borate, methylpyridinium tetrakis(pentafluorophenyl)borate, benzylpyridinium tetrakis(pentafluorophenyl)borate, methyl(2-cyanopyridinium) tetrakis(pentafluorophenyl)borate, benzyl(2-cyanopyridinium) tetrakis(pentafluorophenyl)borate, methyl(4-cyanopyridinium) tetrakis(pentafluorophenyl)borate, triphenylphosphonium tetrakis(pentafluorophenyl)borate, dimethylanilinium tetrakis[bis(3,5-ditrifluoromethyl)phenyl]borate, ferrocenium tetraphenylborate, silver tetraphenylborate, trityl tetraphenylborate, tetraphenylporphyrinmanganese tetraphenylborate, ferrocenium tetrakis(pentafluorophenyl)borate, (1,1'-dimethylferrocenium) tetrakis(pentafluorophenyl)borate, decamethylferrocenium tetrakis(pentafluorophenyl)borate, silver tetrakis(pentafluorophenyl)borate, trityl tetrakis(pentafluorophenyl)borate, lithium tetrakis(pentafluorophenyl)borate, sodium tetrakis(pentafluorophenyl)borate, tetraphenylporphyrinmanganese tetrakis(pentafluorophenyl)borate, silver tetrafluoroborate, silver hexafluorophosphate, silver hexafluoroarsenate, silver perchlorate, silver trifluoroaceate, and silver trifluoromethanesulfonate.

Examples of the aluminoxane that is the aforementioned component (ii-2) include known chain aluminoxanes and cyclic aluminoxanes.

The polypropylene-based resin (A) may also be produced by jointly using an organoaluminum compound, such as trimethylaluminum, triethylaluminum, triisopropylaluminum, triisobutylaluminum, dimethylaluminum chloride, diethylaluminum chloride, methylaluminum dichloride, ethylaluminum dichloride, dimethylaluminum fluoride, diisobutylaluminum hydride, diethylaluminum hydride, and ethylaluminum sesquichloride.

From the viewpoint of spinnability of the fiber, the content of the polypropylene-based resin (A) occupying in the sum total of 100% by mass of the polypropylene-based resin (A) and the polypropylene-based resin (B) is preferably 1% by mass or more, more preferably 3% by mass or more, and still more preferably 5% by mass or more, and it is preferably 30% by mass or less, more preferably 25% by mass or less, and still more preferably 20% by mass or less.

(Polypropylene-based Resin (B))

A melting point (Tm-D) of the polypropylene-based resin (B) (exclusive of the polypropylene-based resin (A)) which is used in the present embodiment is higher than 120°C. When the melting point (Tm-D) is 120°C or lower, there is a concern that the strength of the fiber is insufficient. From such a viewpoint, the melting point (Tm-D) of the polypropylene-based resin (B) is preferably 125°C or higher, more preferably 130°C or higher, and still more preferably 135°C or higher. In addition, though an upper limit thereof is not particularly limited, it is preferably 180°C or lower.

The melting point (Tm-D) of the polypropylene-based resin (B) in the present embodiment is defined as a peak top of a peak observed on the highest temperature side of a melting endothermic curve obtained by holding under a nitrogen atmosphere at -10°C for 5 minutes and then increasing the temperature at a rate of 10°C/min by using a differential scanning calorimeter (DSC).

A melt flow rate (MFR) of the polypropylene-based resin (B) is preferably 5 g/10 min or more, more preferably 7 g/10 min or more, sill more preferably 10 g/10 min or more, and especially preferably 20 g/10 min or more, and it is preferably 100 g/10 min or less, more preferably 75 g/10 min or less, and still more preferably 50 g/10 min or less. When the MFR is 5 g/10 min or more, the spinnability becomes more favorable, whereas when it is 100 g/10 min or less, the strength of the fiber can be more improved.

The melt flow rate (MFR) is measured by the measurement method prescribed in JIS K7210, and it is measured under a condition at a temperature of 230°C and a load of 2.16 kg.

The polypropylene-based resin (B) is not particularly limited so long as the aforementioned melting point (Tm-D) falls within the aforementioned range, and it may be a propylene homopolymer or may be a copolymer. Above all, a propylene homopolymer is preferred.

In the case where the polypropylene-based resin (B) is a copolymer, a copolymerization ratio of a propylene unit is more than 50 mol%, preferably 60 mol% or more, more preferably 70 mol% or more, still more preferably 90 mol% or more, and yet still more preferably 95 mol% or more. A copolymerizable monomer is at least one selected from the group consisting of ethylene and an $\alpha$-olefin having 4 to 30 carbon atoms, and specifically, examples thereof include ethylene, 1-butene, 1-pentene, 1-hexene, 1-octene, and 1-decene. In the case where the polypropylene-based resin (B) is a copolymer, it is preferred that the polypropylene-based resin (B) contains at least one structural unit selected from the group consisting of ethylene and an $\alpha$-olefin having 4 to 30 carbon atoms in an amount of more than 0 mol% and 20 mol% or less.

From the viewpoint of spinnability of the fiber, the content of the polypropylene-based resin (B) occupying in the sum total of 100% by mass of the polypropylene-based resin (A) and the polypropylene-based resin (B) is preferably 70% by mass or more, more preferably 75% by mass or more, and still more preferably 80% by mass or more, and it is preferably 99% by mass or less, more preferably 97% by mass or less, and still more preferably 95% by mass or less.

The thermoplastic resin composition which is used in the present embodiment can contain, in addition to the aforementioned polypropylene-based resin (A) and polypropylene-based resin (B), an arbitrary additive within a range where the effects of the present embodiment are not impaired. Specific examples of the additive include a foaming agent, a crystal nucleating agent, a weatherability stabilizer, a UV absorber, a light stabilizer, a heat resistance stabilizer, an antistatic agent, a release agent, a flame retardant, a synthetic oil, a wax, an electric property-improving agent, a slip inhibitor, an antiblocking agent, a viscosity-controlling agent, a coloring inhibitor, a defogging agent, a lubricant, a pigment, a dye, a plasticizer, a softening agent, an age resister, a hydrochloric acid-absorbing agent, a chlorine scavenger, an antioxidant, and an antitack agent.

In the thermoplastic resin composition which is used in the present embodiment, the content of the polypropylene-based resin (A) and the polypropylene-based resin (B) is preferably 80% by mass or more, more preferably 90% by mass or more, and still more preferably 95% by mass or more.

[Fiber]

From the viewpoint of hand touch feeling as the nonwoven fabric, the fiber of the present embodiment has a fiber diameter of typically 2.0 denier or less, preferably 1.8 denier or less, more preferably 1.6 denier or less, and still more preferably 1.4 denier or less. Although a lower limit of the fiber diameter is not particularly limited, from the viewpoint of easiness of production, it is preferably 0.5 denier or more, more preferably 0.6 denier or more, and still more preferably 0.7 denier or more.

[Nonwoven Fabric]

The nonwoven fabric of the present embodiment contains the aforementioned fiber having excellent spinnability. In addition, the nonwoven fabric of the present embodiment may also be a multilayered nonwoven fabric including a laminate of two or more layers. In that case, from the viewpoint of smoothness of the surface, it is preferred that at least one layer of the nonwoven fabric constituting an outer layer of the multilayered nonwoven fabric is the nonwoven fabric including the aforementioned fiber.

<Production Method of Nonwoven Fabric>

The production method of the nonwoven fabric of the present embodiment is not particularly limited, and a conventionally known method can be adopted. As an example thereof, the spunbond method is shown below.

Generally, in the spunbond method, a melt-extruded resin composition is spun, stretched, and then opened to form a continuous long fiber, and subsequently, in the continuing step, the continuous long fiber is deposited on a moving collector surface and entangled to produce a nonwoven fabric. According to the foregoing method, the nonwoven fabric can be continuously produced, and the fibers constituting the nonwoven fabric are a stretched continuous long fiber, and therefore, the strength is high. As for the spunbond method, a conventionally known method can be adopted, and the fibers can be produced by extruding a molten polymer from, for example, a group of nozzle having several thousand holes, or for example, a group of nozzles each having about 40 holes. After being ejected from the nozzle, the molten fiber is cooled by a cross-flow cold air system and then drawn away from the nozzle, followed by stretching by high-speed airflow. Generally, there are two kinds of air-damping methods, both of which use a venturi effect. In the first method, a filament is stretched using a suction slot (slot stretching), and this method is conducted with a width of the nozzle or a width of the machine. In the second method, a filament is stretched through a nozzle or a suction gun. A filament formed by this method is collected on a screen (wire) or a pore forming belt to form a web. Subsequently, the web passes through compression rolls and then between heating calender rolls and are bounded at a part where the embossing part on one roll includes about 10% or more and about 40% or less of the area of the web to form a nonwoven fabric.

[Fiber Product]

Although the fiber product using the nonwoven fabric of the present embodiment is not particularly limited, for example, the following fiber products can be exemplified. That is, examples thereof include a member for a disposable diaper, a stretchable member for a diaper cover, a stretchable member for a sanitary product, a stretchable member for a hygienic product, a stretchable tape, an adhesive bandage, a stretchable member for clothing, an insulating material for clothing, a heat insulating material for clothing, a protective suit, a hat, a mask, a glove, a supporter, a stretchable bandage, a base fabric for a fomentation, a non-slip base fabric, a vibration absorber, a finger cot, an air filter for a clean room, an electret filter subjected to electret processing, a separator, a heat insulator, a coffee bag, a food packaging material, a ceiling skin material for an automobile, an acoustic insulating material, a cushioning material, a speaker dust-proof material, an air cleaner material, an insulator skin, a backing material, an adhesive nonwoven fabric sheet, various members for automobiles, such as a door trim, various cleaning materials, such as a cleaning material for a copying machine, the facing and backing of a carpet, an agricultural beaming, a timber drain, members for shoes, such as a sport shoe skin, a member for a bag, an industrial sealing material, a wiping material, and a sheet.

Examples

Next, the present invention is specifically described by reference to Examples, but it should be construed that the present invention is by no means limited by these Examples.

[Melt Flow Rate (MFR)]

In conformity with JIS K7210, the MFR of each of the polypropylene-based resin (A) and the polypropylene-based resin (B) was measured under a condition at a temperature of 230°C and a load of 2.16 kg.

[DSC Measurement]

A melting endotherm (ΔH-D) was determined from a melting endothermic curve obtained by holding 10 mg of a sample at -10°C for 5 minutes under a nitrogen atmosphere and then increasing the temperature at a rate of 10°C/min by using a differential scanning calorimeter (DSC-7, manufactured PerkinElmer Inc.). In addition, a melting point (Tm-D) was determined from a peak top of a peak observed on the highest temperature side of the obtained melting endothermic curve.

The melting endotherm (ΔH-D) is calculated in a manner in which when a line connecting a point on the low-temperature side free from a change of the amount of heat with a point on the high-temperature side free from a change of the amount of heat is defined as a baseline, an area surrounded by a line portion including the peak of the melting endothermic curve obtained by the DSC measurement using a differential scanning calorimeter (DSC-7, manufactured PerkinElmer Inc.) and the baseline is determined.

[Measurement of Weight Average Molecular Weight (Mw) and Molecular Weight Distribution (Mw/Mn)]

The weight average molecular weight (Mw) and the number average molecular weight (Mn) were measured by the gel permeation chromatography (GPC) method to obtain the molecular weight distribution (Mw/Mn). The following device and condition were used for the measurement to obtain a weight average molecular weight and a number average molecular weight as expressed in terms of polystyrene. The molecular weight distribution (Mw/Mn) is a value calculated from these weight average molecular weight (Mw) and number average molecular weight (Mn).

<GPC Measuring Device>

Column: "TOSO GMHHR-H(S)HT", manufactured by Tosoh Corporation
Detector: RI detector for liquid chromatogram, "WATERS 150C", manufactured by Waters Corporation

<Measurement Condition>

Solvent: 1,2.4-Trichlorobezene
Measurement temperature: 145°C
Flow rate: 1.0 mL/min
Sample concentration: 2.2 mg/mL
Injection amount: 160 μL
Calibration curve: Universal Calibration
Analysis program: HT-GPC (Ver. 1.0)
In the following Examples, the following raw materials were used.

<Polypropylene-based Resin (A)>

Polypropylene-based Resin (A1):

"L-MODU (registered trademark) S400" (manufactured by Idemitsu Kosan Co., Ltd., homopolypropylene)

<Polypropylene-based Resin (C)>

Polypropylene-based Resin (C1):

"L-MODU (registered trademark) S901" (manufactured by Idemitsu Kosan Co., Ltd., homopolypropylene)

<Polypropylene-based Resin (B)>

Polypropylene-based Resin (B1):

"NOVATEC SA03" (manufactured by Japan Polypropylene Corporation) Polypropylene-based Resin (B2): "HG455FB" (manufactured by Borealis AG)

Polypropylene-based Resin (B3):

"PP3155" (manufactured by ExxonMobil Chemical Corporation)
With respect to the polypropylene-based resin (A1), the polypropylene-based resin (C1), and the polypropylene-based resins (B1) to (B3), the aforementioned measurements were performed. The results are shown in Table 1.

<Other Component>

Slip inhibitor: Erucamide, a trade name: EA-10

Table 1

| | Unit | Polypropylene-based resin (A1) | Polypropylene-based resin (C1) | Polypropylene-based resin (B1) | Polypropylene-based resin (B2) | Polypropylene-based resin (B3) |
|---|---|---|---|---|---|---|
| MFR | g/10 min | 2,600 | 50 | 30 | 27 | 36 |
| Melting endotherm (ΔH-D) | J/g | 36 | 36 | 92 | 93 | 87 |
| Melting point (Tm-D) | °C | 80 | 77.8 | 160 | 161 | 165 |
| Weight average molecular weight (Mw) | - | 45,000 | 112,000 | 180,000 | 175,000 | 166,000 |
| Molecular weight distribution (Mw/Mn) | - | 2.0 | 2.0 | 2.7 | 3.2 | 3.5 |

[Spinnable Maximum Cabin Pressure and Spinnable Maximum Ejector Pressure]

(Maximum Cabin Pressure)

The pressure was increased by every 500 Pa from 3,500 Pa, end breakage during spinning was confirmed through visual inspection, and a maximum pressure at which the end breakage did not occur was defined as the maximum cabin pressure.

(Maximum Ejector Pressure)

The pressure was increased by every 0.5 kg/cm$^2$ from 0.5 kg/cm$^2$, end breakage during spinning was confirmed through visual inspection, and a maximum pressure at which the end breakage did not occur was defined as the maximum ejector pressure.

[Measurement of Basis Weight]

A mass of 20 cm × 20 cm of the resulting nonwoven fabric was measured to measure a basis weight (gsm).

[Measurement of Fiber Diameter]

Fibers in the nonwoven fabric were observed with a polarizing microscope, an average value (d) of fiber diameter of randomly selected 100 fibers was measured, and fiber diameter of the nonwoven fabric sample was calculated from a density of the resin ($\rho$= 900,000 g/m$^3$) according to the following expression.

$$\text{Fiber diameter (denier)} = \rho \times \pi \times (d/2)^2 \times 9{,}000$$

[Measurement of Tensile Strength at Break and Tensile Elongation (Strain) at Break]

Specimens having a size of 200 mm in length and 50 mm in width were sampled from the resulting nonwoven fabric with respect to the machine direction (MD) and the cross direction (CD) relative to the machine direction. Using a tensile tester ("Autograph AG-I", manufactured by Shimadzu Corporation) and setting an initial length $L_0$ to 100 mm, the specimen was elongated at a tensile rate of 300 mm/min; a strain and a load were measured during the elongation process; and values of load and strain at the moment when the nonwoven fabric was broken were defined as the tensile

strength at break and the tensile elongation (strain) at break, respectively.

[Measurement of Static Friction Coefficient]

A specimen having a size of 220 mm in length and 100 mm in width and a specimen having a size of 220 mm in length and 70 mm in width were sampled from the resulting nonwoven fabric in each of the machine direction (MD) and the cross direction (CD) relative to the machine direction. Two sheets of the nonwoven fabrics were overlaid on a seating of a static friction coefficient measuring device ("friction measuring device AN type", manufactured by Toyo Seiki Kogyo Co., Ltd.); a weight of 1,000 g was placed thereon; the seating was inclined at a rate of 2.7 degrees/min; and an angle when the nonwoven fabrics slipped 10 mm was measured. From the mass (1,000 g) of the placed weight and the angle when the nonwoven fabrics slipped 10 mm, the static friction coefficient was calculated.
It is meant that as the value of the friction coefficient is small, the hand touch feeling, such as smoothness of the nonwoven fabric, is favorable.

[Cantilever Test]

A specimen having a size of 100 mm in length and 100 mm in width was fabricated from the resulting nonwoven fabric, and the cantilever test was performed by using a cantilever tester having a slope having an incline angle of 45° in one end of a seating thereof. The specimen was slipped on the seating at a fixed speed in the slope direction, and a movement distance of the nonwoven fabric at the moment when the specimen was bent, and one end thereof came into contact with the slope was measured. The measurement was performed in both of the machine direction (MD) and the cross direction (CD) relative to the machine direction.

[Handle-O-Meter Test]

A specimen having a size of 200 mm in length and 200 mm in width was fabricated from the resulting nonwoven fabric. The specimen was set on a slit having a width of 1/4 inch such that it was at an angle of 90° to the slit, and the position of 67 mm (1/3 of the specimen width) from the side of the specimen was indented in a proportion of 8 mm by a blade of a penetrator. A resistance value at this time was measured to evaluate drape-ability of the specimen. The characteristic feature of this measurement method resides in the matter that the specimen slightly slips on a test bench, and a force in which a frictional force generated and a resistance force (drape-ability) at the indentation time are combined together is measured. It is meant that as the value of resistance value obtained by the measurement is small, the drape-ability of the nonwoven fabric is favorable.

(Example 1)

1. Production of Fiber

5% by mass of the polypropylene-based resin (A1) as the polypropylene-based resin (A), 93% by mass of the polypropylene-based resin (B2) as the polypropylene-based resin (B), and 2% by mass of erucamide as the slip inhibitor were kneaded to obtain a thermoplastic resin composition.
The thermoplastic resin composition was melt-extruded at a resin temperature of 240°C using a single-screw extruder having a gear pump, and the molten resin was discharged through a nozzle having a nozzle diameter of 0.6 mm (number of holes: 6,800 holes/m) at throughput per hole of 0.49 g/min/hole, thereby performing spinning to obtain a fiber.

2. Production of Nonwoven Fabric

The fiber obtained by spinning was sucked at a cabin pressure of 6,500 Pa by a cooling air duct under the nozzle while cooling with air, and the fiber was laminated on the net surface moving at a line speed of 180 m/min. The fibers collected on the net surface was embossed by calender rolls heated at a temperature of 158°C/146°C at a nip pressure of 60 N/mm and at a line speed 222 m/min and wound up by a take-up roll.
The obtained nonwoven fabric was evaluated by the aforementioned measurement methods. The results are shown in Table 2.

(Examples 2 to 4 and Comparative Example 1)

Nonwoven fabrics were obtained in the same manner as in Example 1, except for changing the kind and the

blending amount of each of components to those described in Table 2 and also changing the extrusion molding condition, the spinning condition, and the line condition to those described in Table 2.

The obtained nonwoven fabrics were evaluated by the aforementioned measurement methods. The results are shown in Table 2.

Table 2

| | | | Unit | Example 1 | Example 2 | Example 3 | Example 4 | Comparative Example 1 |
|---|---|---|---|---|---|---|---|---|
| Thermoplastic resin composition | Polypropylene-based resin (A1) | MFR: 2,600 g/10 min | mass% | 5 | 5 | 5 | 10 | - |
| | Polypropylene-based resin (C1) | MFR: 50 g/10 min | mass% | - | - | - | - | - |
| | Polypropylene-based resin (B1) | MFR: 30 g/10 min | mass% | - | - | - | - | - |
| | Polypropylene-based resin (B2) | MFR: 27 g/10 min | mass% | 93 | 93 | - | - | 98 |
| | Polypropylene-based resin (B3) | MFR: 36 g/10 min | mass% | - | - | 93 | 88 | - |
| | Slip inhibitor | MFR: 60 g/10 min | mass% | 2 | 2 | 2 | 2 | 2 |
| Extrusion molding condition | Resin temperature | | °C | 240 | 240 | 240 | 240 | 240 |
| | Throughput per hole | | g/min | 0.49 | 0.42 | 0.44 | 0.38 | 0.49 |
| Spinning condition | Cooling air temperature | | °C | - | - | - | - | - |
| | Cooling air rate | | m/sec | - | - | - | - | - |
| | Spinnable maximum cabin pressure | | Pa | 6500 | 6500 | 6500 | 6500 | 4000 |
| Line condition | Embossed pattern | | - | Round dot | Round dot | Round dot | Round dot | Round dot |
| | Embossing area ratio | | % | 12 | 12 | 12 | 12 | 12 |
| | Calender temperature (SET) | | °C/°C | 158/146 | 158/146 | 158/146 | 158/146 | 160/150 |
| | Nip pressure | | N/mm | 60 | 60 | 60 | 60 | 60 |
| | Line speed | | m/min | 222 | 181 | 185 | 185 | 222 |

(continued)

| | | | Unit | Example 1 | Example 2 | Example 3 | Example 4 | Comparative Example 1 |
|---|---|---|---|---|---|---|---|---|
| Physical properties of nonwoven fabric | Basis weight | | gsm | 15 | 15 | 14 | 14 | 15 |
| | Fiber diameter | | denier | 1.2 | 1.0 | 1.1 | 1.1 | 1.5 |
| | Tensile strength at break | MD | N/5 cm | 44 | 51 | 36 | 31 | 40 |
| | | CD | N/5 cm | 21 | 24 | 20 | 16 | 21 |
| | Tensile elongation (strain) at break | MD | % | 63 | 75 | 74 | 69 | 66 |
| | | CD | % | 77 | 81 | 99 | 84 | 79 |
| | Static friction coefficient | MD | - | 0.24 | 0.25 | 0.26 | 0.24 | 0.29 |
| | | CD | - | 0.29 | 0.30 | 0.31 | 0.28 | 0.32 |
| | Cantilever test | CD | mm | 27 | 23 | 23 | 22 | 26 |
| | Handle-O-Meter | CD | mN | 25 | 31 | 41 | 35 | 56 |

It is noted that as compared with the nonwoven fabric of Comparative Example 1 not containing the polypropylene-based resin (A), the nonwoven fabrics containing the fiber including the thermoplastic resin composition containing the polypropylene-based resin (A) and the polypropylene-based resin (B) (Examples 1 to 4) are small in the static friction coefficient and the resistance value measured by the Handle-OMeter test, and therefore, they are good in the hand touch feeling of the nonwoven fabric and excellent in the drape-ability.

(Example 5)

1. Production of Fiber

5% by mass of the polypropylene-based resin (A1) as the polypropylene-based resin (A), 93% by mass of the polypropylene-based resin (B1) as the polypropylene-based resin (B), and 2% by mass of erucamide as the slip inhibitor were kneaded to obtain a thermoplastic resin composition.

The thermoplastic resin composition was melt-extruded at a resin temperature of 230°C using a single-screw extruder having a gear pump, and the molten resin was discharged through a nozzle having a hole diameter of 0.6 mm (number of holes: 1,795 holes/m) at throughput per hole of 0.60 g/min/hole, thereby performing spinning to obtain a fiber.

2. Production of Nonwoven Fabric

While the obtained fiber was cooled with air at a temperature of 12.5°C and at an air rate of 0.6 m/sec, the fiber was sucked at an ejector pressure of 5.0 kg/cm$^2$, thereby collecting the fiber on the moving net surface. The fibers collected on the net surface was embossed by calender rolls heated at a temperature of 135°C/135°C at a nip pressure of 40 N/mm and wound up by a take-up roll.

The obtained nonwoven fabric was evaluated by the aforementioned measurement methods. The results are shown in Table 3.

(Example 6 and Comparative Examples 2 and 3)

Nonwoven fabrics were obtained in the same manner as in Example 5, except for changing the kind and the blending amount of each of components to those described in Table 3 and also changing the extrusion molding condition, the spinning condition, and the line condition to those described in Table 3.

The obtained nonwoven fabrics were evaluated by the aforementioned measurement methods. The results are shown in Table 3.

Table 3

| | | | Unit | Example 5 | Comparative Example 2 | Example 6 | Comparative Example 3 |
|---|---|---|---|---|---|---|---|
| Thermoplastic resin composition | Polypropylene-based resin (A1) | MFR: 2,600 g/ 10 min | mass% | 5 | - | 5 | - |
| | Polypropylene-based resin (C1) | MFR: 50 g/10 min | mass% | - | 5 | - | 5 |
| | Polypropylene-based resin (B1) | MFR: 30 g/10 min | mass% | 93 | 93 | 93 | 93 |
| | Polypropylene-based resin (B2) | MFR: 27 g/10 min | mass% | - | - | - | - |
| | Polypropylene-based resin (B3) | MFR: 36 g/10 min | mass% | - | - | - | - |
| | Slip inhibitor | MFR: 60 g/10 min | mass% | 2 | 2 | 2 | 2 |
| Extrusion molding condition | Resin temperature | | °C | 230 | 230 | 200 | 200 |
| | Throughput per hole | | g/min | 0.60 | 0.60 | 0.60 | 0.60 |
| Spinning condition | Cooling air temperature | | °C | 12.5 | 12.5 | 12.5 | 12.5 |
| | Cooling air rate | | m/sec | 0.6 | 0.6 | 0.6 | 0.6 |
| | Spinnable maximum ejector pressure | | $kg/cm^2$ | 5.0 | 4.5 | 4.0 | 3.0 |
| Line condition | Embossed pattern | | - | Diamond | Diamond | Diamond | Diamond |
| | Embossing area ratio | | % | 10 | 10 | 10 | 10 |
| | Calender temperature (SET) | | °C/°C | 135/135 | 135/135 | 135/135 | 135/135 |
| | Nip pressure | | N/min | 40 | 40 | 40 | 40 |
| | Line speed | | m/min | 120 | 120 | 120 | 120 |
| Physical properties of nonwoven fabric | Basis weight | | gsm | 15 | 15 | 15 | 15 |
| | Fiber diameter | | denier | 1.2 | 1.3 | 1.4 | 1.6 |
| | Tensile strength at break | MD | N/5 cm | 39 | 39 | 38 | 32 |
| | | CD | N/5 cm | 17 | 16 | 16 | 15 |
| | Tensile elongation (strain) at break | MD | % | 66 | 63 | 65 | 63 |
| | | CD | % | 68 | 59 | 67 | 70 |
| | Static friction coefficient | MD | - | - | - | 0.24 | 0.27 |
| | | CD | - | - | - | 0.30 | 0.32 |
| | Cantilever test | CD | mm | 31 | 32 | 26 | 29 |
| | Handle-O-Meter | CD | mN | 50 | 62 | 53 | 56 |

It is noted that as compared with the nonwoven fabrics of Comparative Examples 2 and 3 containing the polypropylene-based resin (C1), each of which does not satisfy the melt flow rate (MFR) of 1,000 g/10 min or more, the nonwoven fabrics containing the fiber including the thermoplastic resin composition containing the polypropylene-based resin (A) and the polypropylene-based resin (B) (Examples 5 and 6) are small in the resistance value in the CD direction as measured by the Handle-O-Meter test and excellent in the drape-ability. In addition, in the case of performing extrusion molding at the same resin temperature, in Comparative Examples 2 and 3, the ejector pressure becomes low, and fiber diameter of the obtained fiber becomes thick, as compared with the Examples 5 and 6. According to this, it may be said that by using the thermoplastic resin composition containing the polypropylene-based resin (A) and the polypropylene-based resin (B), the spinnability is excellent even at a lower temperature.

## Claims

1. A fiber comprising a thermoplastic resin composition containing a polypropylene-based resin (A) in which a melting endotherm (ΔH-D) obtained from a melting endothermic curve obtained by holding a sample under a nitrogen atmosphere at -10°C for 5 minutes and then increasing the temperature at a rate of 10°C/min by using a differential scanning calorimeter (DSC) is 0 J/g or more and 80 J/g or less, and a melt flow rate (MFR) measured under a condition at a temperature of 230°C and a load of 2.16 kg in conformity with JIS K7210 is 1,000 g/10 min or more; and a polypropylene-based resin (B) (exclusive of the polypropylene-based resin (A)) having a melting point (Tm-D) of higher than 120°C, the fiber having a fiber diameter of 2.0 denier or less.

2. The fiber according to claim 1, wherein the MFR of the polypropylene-based resin (A) is 2,300 g/10 min or more.

3. The fiber according to claim 1 or 2, wherein the MFR of the polypropylene-based resin (A) is 3,500 g/10 min or less.

4. The fiber according to any one of claims 1 to 3, wherein the polypropylene-based resin (A) is a propylene homopolymer.

5. The fiber according to any one of claims 1 to 4, wherein the MFR of the polypropylene-based resin (B) is 5 g/10 min or more and 100 g/10 min or less.

6. The fiber according to any one of claims 1 to 5, wherein the polypropylene-based resin (B) is a propylene homopolymer.

7. The fiber according to any one of claims 1 to 6, wherein the content of the polypropylene-based resin (A) occupying in the sum total of 100% by mass of the polypropylene-based resin (A) and the polypropylene-based resin (B) is 1% by mass or more and 30% by mass or less.

8. A nonwoven fabric comprising the fiber according to any one of claims 1 to 7.

**INTERNATIONAL SEARCH REPORT**

International application No. PCT/JP2019/007022

A. CLASSIFICATION OF SUBJECT MATTER
Int.Cl. D01F6/46(2006.01)i, D04H1/4291(2012.01)i
According to International Patent Classification (IPC) or to both national classification and IPC

B. FIELDS SEARCHED
Minimum documentation searched (classification system followed by classification symbols)
Int.Cl. D01F6/06, D01F6/46, D04H1/4291

Documentation searched other than minimum documentation to the extent that such documents are included in the fields searched

| | |
|---|---|
| Published examined utility model applications of Japan | 1922-1996 |
| Published unexamined utility model applications of Japan | 1971-2019 |
| Registered utility model specifications of Japan | 1996-2019 |
| Published registered utility model applications of Japan | 1994-2019 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X | WO 2016/002950 A1 (IDEMITSU KOSAN CO., LTD.) 07 January 2016, claims, paragraphs [0001], [0015]-[0022], [0031]-[0034], [0049], [0086]-[0094], [0101], table 2, [0120], table 3 & US 2017/0145198 A1, claims, paragraphs [0001], [0061]-[0077], [0088]-[0094], [0126]-[0129], [0222]-[0249], tables 2, 3 & EP 3165656 A1 & CN 106661792 A | 1-8 |
| X | US 2017/0304481 A1 (KIMBERLY-CLARK WORLDWIDE, INC.) 26 October 2017, claims, paragraphs [0013], [0081]-[0084] & WO 2016/080960 A1 & EP 3220964 A1 & AR 103136 A & AU 2014412048 A & KR 10-2017-0087468 A & CN 107073162 A & MX 2017005149 A & BR 112017008700 A & RU 2017118032 A | 1-8 |

☒ Further documents are listed in the continuation of Box C.  ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| | |
|---|---|
| Date of the actual completion of the international search<br>26 April 2019 (26.04.2019) | Date of mailing of the international search report<br>14 May 2019 (14.05.2019) |
| Name and mailing address of the ISA/<br>Japan Patent Office<br>3-4-3, Kasumigaseki, Chiyoda-ku,<br>Tokyo 100-8915, Japan | Authorized officer<br><br>Telephone No. |

Form PCT/ISA/210 (second sheet) (January 2015)

INTERNATIONAL SEARCH REPORT

International application No. PCT/JP2019/007022

C (Continuation). DOCUMENTS CONSIDERED TO BE RELEVANT

| Category* | Citation of document, with indication, where appropriate, of the relevant passages | Relevant to claim No. |
|---|---|---|
| X | US 2010/0029162 A1 (DATTA, Sudhin) 04 February 2010, claims, paragraphs [0049], [0068]-[0071], [0076], tables 8-10 & WO 2010/016969 A1 & EP 2331632 A1 & CN 102105528 A & DK 2331632 T | 1-3, 6-8 |
| X | WO 2011/090132 A1 (IDEMITSU KOSAN CO., LTD.) 28 July 2011, claims, paragraphs [0001], [0008]-[0026], [0029], [0033]-[0036], table 1, [0049]-[0063], table 3 & US 2012/0302982 A1, claims, paragraphs [0001], [0025]-[0059], [0070], [0078]-[0087], table 1, [0138]-[0158], table 2 & JP 2011-168944 A & EP 2527508 A1 | 1-4, 6-8 |
| X | JP 2017-160575 A (3M INNOVATIVE PROPERTIES CO.) 14 September 2017, claims, paragraphs [0034]-[0035], [0051]-[0052], table 1 & US 2019/0061647 A1, claims, paragraphs [0035]-[0036], [0052]-[0053], table 1 & WO 2017/155850 A1 & EP 3426526 A1 & CN 108712976 A | 1-4, 6-8 |
| A | JP 2016-40428 A (IDEMITSU KOSAN CO., LTD.) 24 March 2016, entire text & US 2018/0209080 A1 & WO 2015/141750 A1 & EP 3121314 A1 & CN 106062261 A | 1-8 |
| A | JP 2015-144991 A (IDEMITSU KOSAN CO., LTD.) 13 August 2015, entire text (Family: none) | 1-8 |
| A | JP 2009-62667 A (IDEMITSU KOSAN CO., LTD.) 26 March 2009, entire text & US 2010/0190405 A1 & WO 2009/001871 A1 & EP 2161360 A1 & CN 101688341 A & KR 10-2010-0031108 A | 1-8 |
| A | JP 5885860 B2 (BOREALIS AG) 16 March 2016, entire text & US 2015/0024650 A1 & WO 2013/124219 A1 & EP 2631269 A1 & CN 104114634 A & KR 10-2014-0119821 A & DK 2631269 T & ES 2634514 T & PL 2631269 T | 1-8 |
| A | US 2016/0251788 A1 (KIMBERLY-CLARK WORLDWIDE, INC.) 01 September 2016, entire text & WO 2015/075631 A1 & EP 3071740 A1 & AU 2014351466 A & KR 10-2016-0086896 A & MX 2016006439 A & AR 98469 A & CN 106795670 A | 1-8 |
| A | US 2005/0182198 A1 (CHENG, Chiayung) 18 August 2005, entire text & WO 2005/080497 A1 & EP 1718702 A1 & CN 1918228 A | 1-8 |
| P, X | JP 2018-87329 A (DAIWABO HOLDINGS CO., LTD.) 07 June 2018, claims, paragraphs [0014], [0029]-[0044] (Family: none) | 1-6 |

Form PCT/ISA/210 (continuation of second sheet) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2014119687 A
- WO 2003087172 A